# EUROPÄISCHE PATENTSCHRIFT

(11) **EP 0 888 511 B1**
(45) Veröffentlichungstag und Bekanntmachung des Hinweises auf die Patenterteilung: **01.03.2000**
(21) Anmeldenummer: 97908252.6
(22) Anmeldetag: 18.03.1997
(51) Int. Cl.: F16L 21/03, F16L 21/035

(54) **DICHTRING FÜR EINE ROHRVERBINDUNG**
PILE CONNECTION SEALING RING
BAGUE D'ETANCHEITE POUR RACCORD DE TUYAUX

(30) Priorität: 21.03.1996 DE 19611080
(43) Veröffentlichungstag der Anmeldung: 07.01.1999
(73) Patentinhaber: PHOENIX AKTIENGESELLSCHAFT, 21079 Hamburg (DE)
(72) Erfinder: STEINHOFF, Albert, D-48301 Nottuln (DE); GRABE, Werner, D-48249 Dülmen (DE); HENNINGER, Renate, D-21079 Hamburg (DE)
(74) Vertreter: Hoffmeister, Helmut, Dr. Dipl.-Phys.
(86) Internationale Anmeldenummer: EP9701340
(87) Internationale Veröffentlichungsnummer: WO9735138

(56) Entgegenhaltungen:
- EP-A- 0 588 053
- EP-A- 0 691 498
- DE-A- 3 702 477
- US-A- 4 299 399
- US-A- 4 946 175

## Beschreibung

Die Erfindung betrifft einen Dichtring aus einem Elastomer für eine Steckmuffenverbindung zum Abdichten des Spaltes zwischen Enden von Rohren- aus hartem Material (Beton oder anderes keramisches Material, Kunststoff, Metall), mit einem Haupttorus aus einem Elastomer, der eine Aufgleitfläche besitzt, über die die Rohrverbindung selbstzentrierend herstellbar ist, wobei der Haupttorus des Dichtringes im Bereich der Aufgleitfläche mit wenigstens einem umlaufenden, leicht entfernbaren Schutzstreifen verbunden ist, der die Aufgleitfläche zunächst abdeckt und zwischen seiner Unterseite und der Aufgleitfläche einen Hohlraum beläßt, und wobei die Aufgleitfläche mit einer unterhalb des Schutzstreifens liegenden Gleitmittelschicht versehen ist.

Ein Dichtring dieser Art ist bekannt (US A 4 496 175). Nachteilig bei dem bekannten Dichtring ist, daß beim Abreißen des Schutzstreifens das Gleitmittel zum Teil mit dem Schutzstreifen entfernt wird oder das Abreißen des Schutzstreifens erschwert, insbesondere wenn es bei niedrigen Temperaturen steif geworden ist.

Weitere Dichtringe, bei denen die Aufgleitfläche mit einer unterhalb des Schutzstreifens liegenden Gleitmittelschicht versehen ist, sind aus der EP 0 691 498 A1 bekannt. Hier treten im wesentlichen dieselben Nachteile auf, wie bei dem Stand der Technik gemäß US A 4 496 175.

Es stellt sich daher die Aufgabe, die vorgenannten Nachteile zu beseitigen und die Handhabung beim Abreißen des Schutzstreifens von der Gleitmittelschicht zu erleichtern.

Diese Aufgabe wird gelöst, indem die gleitende Schicht an ihrer der Innenseite des Schutzstreifens zugewandten Seite mit einer adhäsionsmindernden Beschichtung versehen ist oder die Innenseite des Schutzstreifens mit einer adhäsionsmindernden Beschichtung versehen ist. Diese Beschichtung kann beispielsweise aus Quarzmehl, Talkum, Graphit, einer Beflockung oder einer Vliesauflage bestehen. Es ist auch möglich, eine silikonisierte Schicht an der Innenseite des Schutzstreifens vorzusehen.

Üblicherweise besteht der Schutzstreifen aus einem einteiligen, dünnen, flügelartigen Element. Es soll aber auch nicht ausgeschlossen werden, den Schutzstreifen aus zwei flügelartigen Hälften herzustellen, die jeweils einseitig an einer peripheren Außenkante der Aufgleitfläche leicht entfernbar angebracht sind In diesem Fall kann die Gleitmittelschicht durch eine Düse bei aufgeklapptem Schutzstreifen eingebracht werden.

Ausführungbeispiele der Erfindung werden anhand der Zeichnung erläutert.

Die Figuren der Zeichnung zeigen im einzelnen:
Figur 1 einen Schnitt durch einen Dichtring in einer ersten Ausführungsform;
Figuren 2a und 2b eine durch Dehnung aufreißende Verbindung zwischen Schutzstreifen und Haupttorus des Dichtstreifens;
Figur 3 einen Schnitt durch einen Dichtring in einer zweiten Ausführungsform;
Figur 4 eine Ausführungsform des Dichtringes mit zwei flügelartigen Hälften des Schutzstreifens.

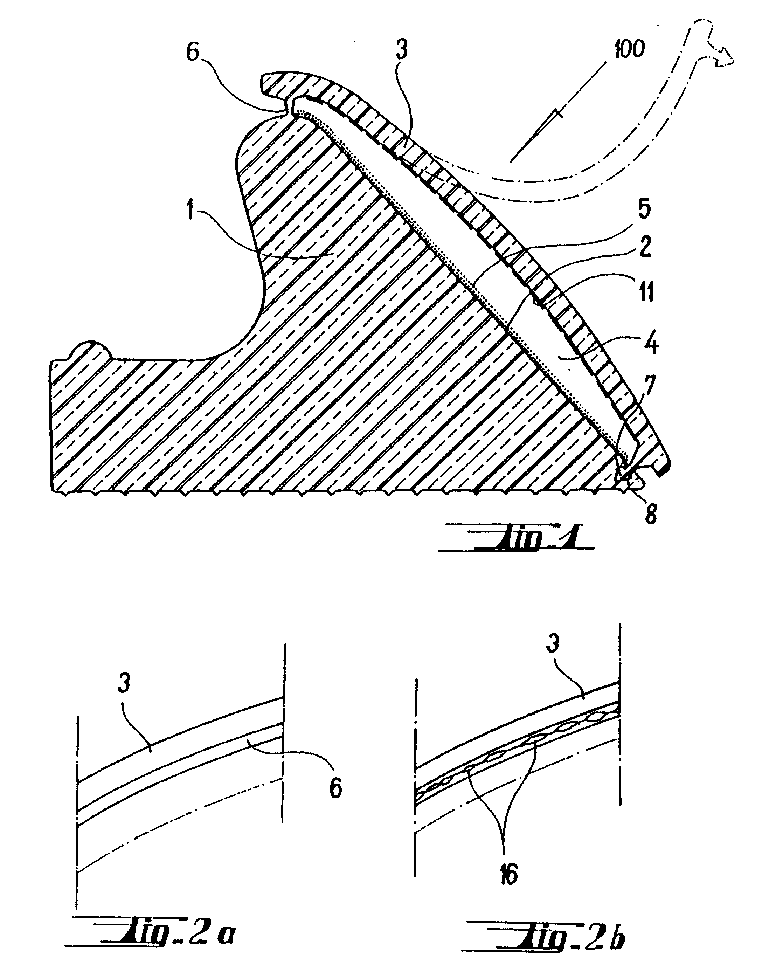

Der in Figur 1 dargestellte Dichtring 100 besteht aus einem Elastomer, insbesondere Styrol-Butadien-Kautschuk. Der Dichtring 100 dient zum Abdichten des Spaltes zwischen zwei Rohrenden von Rohren aus hartem Material. Er wird auf das Spitzende aufgezogen. Zu dem Rohrmaterialien zählen beispielsweise Beton, andere keramische Materialien, Kunststoffe oder Metalle. Allgemein sei aber angedeutet, daß sich Dichtringe mit entsprechenden Abmessungen auch für Schachtaufbauten aus einzelnen Schachtringen, Formstücke und dergleichen eignet, ohne daß der Schutzumfang der Erfindung verlassen wird.

Wie an sich bei derartigen Dichtringen bekannt, ist ein Haupttorus 1 vorhanden, der auf einem Widerlager am Spitzende mit dem Rohr verbunden werden kann. Es sei aber nicht ausgeschlossen, daß der Dichtring unter Spannung in entsprechende Nuten eingelegt wird oder durch Verankerung im Rohrwerkstoff, vorzugsweise auf der Muffenseite, festgehalten wird. Es sei auch nicht ausgeschlossen, daß der Haupttorus 1 als Hohlprofil oder mit verschiedenen Füllungen gestaltet ist.

Der Haupttorus 1 besitzt eine Aufgleitfläche 2, auf die das Ende eines Rohres aufschiebbar ist. Die Aufgleitfläche ist mit einer Gleitmittelschicht 5 versehen, die aus einem an sich bekannten Gleitmittel aus einem Gemisch aus verseiften Metallen, Fetten, Fettsäuren und anorganischen Additiven besteht.

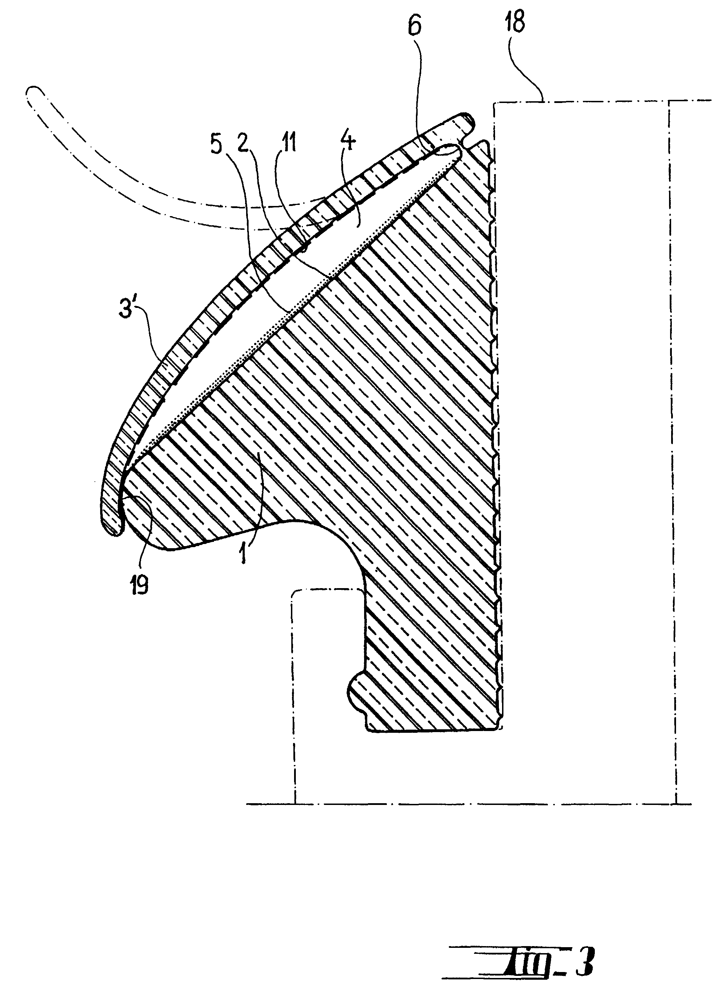

Die Gleitmittelschicht 5 wird durch einen Schutzstreifen 3 geschützt, der zusammen mit dem Haupttorus 1 extrudiert worden ist und aus demselben Material besteht. Der Schutzstreifen 3 ist über einen dünnen Materialsteg 6 mit dem Haupttorus 1 verbunden. Der Materialsteg 6 ist so beschaffen, daß er bei Dehnung des Dichtringes, die dem Auflegen des Dichtringes z.B. auf das Spitzende, vorangeht, partiell einreißt (bei 16; vgl. Figur 2a, 2b) und somit das Abreißen des Schutzstreifens 3 vom Haupttorus 1 erleichtert.

An seinem vorderen Ende ist der Schutzstreifen mit einem Widerhakenprofil 7 versehen, das in eine kompatible Nut 8 des Haupttorus 1 einrastet oder einrastbar ist. Dieses sich ergebende umlaufende Rastelement ermöglicht ein einfaches Abziehen des Schutzstreifens 3 von der unteren Hälfte des Haupttorus, so daß es abgeklappt liegt, wie in Figur 1 gestrichelt dargestellt. Der Materialsteg 6 und das Rastelement begrenzen einen Hohlraum 4, der zwischen der Aufgleitfläche 2 und dem Schutzstreifen 3 gebildet ist. Es sei darauf hingewiesen, daß an Stelle des Materialsteges 6 auch an der oberen Hälfte ein Rastelement vorgesehen werden kann, das mit einem auf dem Haupttorus 1 befindlichen Konterelement verrastbar ist, wobei dem Fachmann verschiedene Lösungen zur Verfügung stehen.

Der Zweck der vorgenannten Einzelheiten ist es, das ein einstückiges Profil extrudiert werden kann, bei dem sowohl der Haupttorus 1 als auch der Abdeckstreifen 3 aus einem Material hergestellt sind. Um einen Dichtring mit einer auf der Aufgleitfläche aufliegenden Gleitmittelschicht zu erhalten, wird ein abgelängter Profilabschnitt ausgelegt und von diesem der Schutzstreifen 3 zunächst abgebogen, so daß die Aufgleitfläche 2 blank liegt. Mit Hilfe einer Spritzdüse wird dann das Gleitmittel aufgebracht, falls erforderlich, glattgestrichen und anschließend der Schutzstreifen wieder aufgelegt und mit dem Haupttorus über die Rastelemente verbunden. Anschließend ist das Gleitmittel völlig abgedeckt. Es kann darauf geachtet werden, daß im Bereich der Stoßstellen das Gleitmittel eine Lücke läßt, so daß mit üblichen Vulkanisierverfahren der Dichtring zusammengefügt werden kann.

Es ist aber auch möglich, zunächst einen Dichtring als Ring zu konfektionieren und anschließend den Schutzstreifen 3 abzubiegen und das Gleitmittel mittels Spritzdüse aufzubringen.

Es sei auch auf die Ausführungsmöglichkeit hingewiesen, in den Schutzstreifen Bohrungen oder Öffnungen einzulassen, in die mit Hilfe einer Spritzdüse ein Gleitmittel eingedrückt wird. Da es sich bei diesen Gleitmitteln üblicherweise um thixotropierende Mittel handelt, sind diese zunächst fließfähig, um dann gelartig zu erstarren.

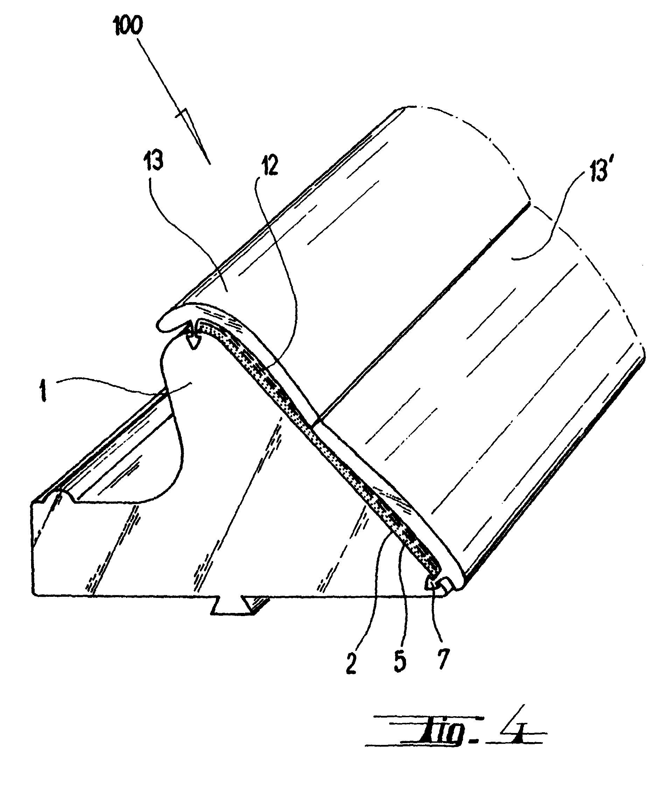

Figur 3 zeigt eine zweite Ausführungsform eines Dichtringes. Auch hier ist ein Haupttorus 1 vorhanden, der auf einem Widerlager am Spitzende mit dem Rohr verbunden werden kann. Es sei aber nicht ausgeschlossen, daß der Dichtring unter Spannung in entsprechende Nuten eingelegt wird oder durch Verankerung im Rohrwerkstoff, vorzugsweise auf der Muffenseite, festgehalten wird.

Der Haupttorus 1 besitzt eine Aufgleitfläche 2, auf die das Ende eines Rohres aufschiebbar ist. Die Aufgleitfläche ist mit der Gleitmittelschicht 5 versehen.

Die Gleitmittelschicht 5 wird durch einen Schutzstreifen 3' geschützt, der zusammen mit dem Haupttorus 1 extrudiert worden ist und aus einem anderen, koextrudierbaren Material besteht. Der Schutzstreifen 3' ist über einen dünnen Materialsteg 6 mit dem Haupttorus 1 verbunden. Der Materialsteg 6 ist an dem Haupttorus an dessen dem Rohr-Spitzende 18 zugewandten Seite angebracht.

An seinem hinteren Ende endet der Schutzstreifen 3' lippenartig aufliegend auf dem Haupttorus.Er ist dort mit diesem über eine aufreißbare Verklebung 19 verbunden. Die Elemente 6 und 19 ermöglichen ein einfaches Abziehen des Schutzstreifens 3' vom Haupttorus. Vor der Verklebung kann der Schutzstreifen abgeklappt werden und liegt wie in Figur 3 gestrichelt dargestellt. Der Hohlraum 4, der zwischen der Aufgleitfläche 2 und dem Schutzstreifen 3 gebildet ist, kann mit einem Gleitmittel verfüllt werden.

Es sei darauf hingewiesen, daß an Stelle des Materialsteges 6 auch an der oberen Hälfte ein Rastelement vorgesehen werden kann, das mit einem auf dem Haupttorus 1 befindlichen Konterelement verrastbar ist.

Um zu verhindern, daß die auf die Gleitmittelschicht aufgedrückte Innenseite des Schutzstreifens beim Entfernen einen Teil des Gleitmittels mitnimmt, wird vorgeschlagen, daß die Innenseite des Schutzstreifens mit einer adhäsionsmindernden Beschichtung 11, insbesondere mit einer silikonisierten Schicht, versehen ist. Es ist aber auch möglich, die frische Gleitmittelschicht mit einer adhäsionsmindernden Beschichtung zu bestäuben, beispielsweise aus Quarzmehl, Talkum oder Graphit. Beispielsweise kann auch Quarzsand mit einer Körnung 0,2 bis 0,4 mm, wie er im Baustoffhandel angeboten wird, aufgestäubt werden. Auch eine Beflockung mit Kunststoff-Mikroteilchen aus PTFE oder mit einer Vliesauflage ist denkbar.

Eine solche adhäsionsmindernde Beschichtung ist in Figur 4 mit der Bezugszahl 12 versehen.

Wie ferner aus Figur 4 zu ersehen ist, kann auch eine Ausführungsform gewählt werden, bei der der Schutzstreifen aus zwei flügelartigen Hälften 13, 13' besteht, die jeweils einseitig an einer Außenkante der Aufgleitfläche 2 leicht entfernbar angebracht sind. Das Gleitmittel kann bei dieser Ausführungsform mittels einer Düse, die in die Mittelöffnung zwischen den beiden flügelartigen Hälften einfahrbar ist, eingedrückt werden.

Wesentlich ist, daß nach Anbringung des Dichtringes und kurz vor dem Aufschieben des mit einem Steckprofil versehenen Rohres auf die Aufgleitfläche 2 die Schutzstreifen-Hälften 13 bzw. 13' durch einfaches Abreißen entfernt werden und damit eine frische und unverschmutzte Gleitmitteloberfläche zur Verfügung steht.

Dies gilt im wesentlichen für alle beschriebenen Ausführungsformen des Dichtringes.

An einer mit einem derartigen Dichtring hergestellten Steckmuffenverbindung oder anderen Rohr- oder Schachtverbindung ist die Verwendung eines Dichtringes der vorbeschriebenen Ausführungsformen daran erkennbar, daß er Abreißstellen aufweist, an denen die Schutzstreifen von Haupttorus abgerissen worden sind.

## Patentansprüche

1. Dichtring (100) aus einem Elastomer für eine Steckmuffenverbindung, zum Abdichten des Spaltes zwischen Enden von Rohren aus hartem Material (Beton oder ein anderes keramisches Material, Kunststoff, Metall), mit einem Haupttorus aus einem Elastomer, der eine Aufgleitfläche (2) besitzt, über die die Rohrverbindung selbstzentrierend herstellbar ist, wobei der Haupttorus (1) des Dichtringes (100) im Bereich der Aufgleitfläche (2) mit wenigstens einem umlaufenden, leicht entfernbaren Schutzstreifen (3,3') verbunden ist, der die Aufgleitfläche (2) zunächst abdeckt und zwischen seiner Unterseite und der Aufgleitfläche einen Hohlraum (4) beläßt, und wobei die Aufgleitfläche (2) mit einer unterhalb des Schutzstreifens (3,3') liegenden Gleitmittelschicht (5) versehen ist,
dadurch gekennzeichnet, daß
die Gleitmittelschicht (5) an ihrer der Innenseite des Schutzstreifens (3,3') zugewandten Seite oder die Innenseite des Schutzstreifens (3,3') mit einer adhäsionsmindernden Beschichtung (12,11) versehen ist.

2. Dichtring nach Anspruch 1, dadurch gekennzeichnet, daß die an der Gleitmittelschicht (5) angebrachte, adhäsionsmindernde Beschichtung (12) aus Quarzmehl, Talkum, Graphit, einer Beflockung oder einer Vliesauflage besteht.

3. Dichtring nach Anspruch 1, dadurch gekennzeichnet, daß die Innenseite des Schutzstreifens (3,3') mit einer silikonisierten Schicht versehen ist.

4. Dichtring nach einem der vorhergehenden Ansprüche, dadurch gekennzeichnet, daß der Schutzstreifen (3,3') aus zwei flügelartigen Hälften (13,13') besteht, die jeweils einseitig an einer peripheren Außenkante (21,22) der Aufgleitfläche (2) leicht entfernbar angebracht sind.

## Claims

1. An elastomer sealing ring (100) for a spigot and socket connection for sealing the gap between ends of pipes made of hard material (concrete or other ceramic material, plastics or metal), comprising an elastomer main torus having a slide-on surface (2) along which the pipes can be connected in self-centring manner, wherein the main torus (1) of the sealing ring (100), in the neighbourhood of the slide-on surface (2) is provided with at least one peripheral easily removable protective strip (3, 3') which initially covers the slide-on surface (2) and leaves a cavity (4) between its underside and the slide-on surface, and wherein the slide-on surface (2) has a layer of lubricant (5) underneath the protective strip (3, 3'), characterised in that an adhesion-reducing coating (12, 11) is provided on the inside of the protective strip (3, 3') or on the side of the lubricant layer (5) facing the inside of the protective strip (3, 3').

2. A sealing ring according to claim 1, characterised in that the adhesion-reducing coating (12) on the lubricant layer (5) is of quartz meal, talc or graphite or is a flock coating or a nonwoven layer.

3. A sealing ring according to claim 1, characterised in that the inside of the protective strip (3, 3') is coated with a siliconised layer.

4. A sealing ring according to any of the preceding claims, characterised in that the protective strip (3, 3') is made up of two wing-like halves (13, 13') each attached in easily removable manner at one side to a peripheral outer edge (21, 22) of the slide-on surface (2).

## Revendications

1. Bague d'étanchéité (100) en élastomère pour raccord de tuyau, destinée à assurer l'étanchéité de l'intervalle entre des extrémités de tuyaux en matière dure (béton ou une autre matière céramique, matière plastique, métal), qui comprend un tore principal en élastomère qui possède une surface d'appui (2) à glissement sur laquelle la connexion des tuyaux peut être réalisée à centrage automatique, dans laquelle le tore principal (1) de la bague d'étanchéité (100) est relié dans la zone de la surface d'appui (2) à glissement à au moins une bande de protection périphérique facilement amovible (3, 3'), qui couvre d'abord la surface d'appui (2) à glissement et ménage entre son côté inférieur et la surface d'appui à glissement un espace creux (4), et dans laquelle la surface d'appui (2) à glissement est pourvue d'une couche (5) d'agent de glissement située au-dessous de la bande de protection( 3, 3'),caractérisée en ce quela couche (5) d'agent de glissement est pourvue d'un revêtement (12, 11) de réduction d'adhérence sur son côté tourné vers le côté intérieur de la bande de protection (3, 3') ou sur le côté intérieur de la bande de protection (3, 3').

2. Bague d'étanchéité selon la revendication 1, caractérisée en ce que le revêtement (12) de réduction d'adhérence appliqué sur la couche (5) d'agent de glissement se compose de farine de quartz, de talc, de graphite, d'un flocage ou d'un revêtement en non tissé.

3. Bague d'étanchéité selon la revendication 1, caractérisée en ce que le côté intérieur de la bande de protection (3, 3') est pourvu d'une couche siliconée.

4. Bague d'étanchéité selon l'une quelconque des revendications précédentes, caractérisée en ce que la bande de protection (3, 3') se compose de deux moitiés (13, 13') en forme d'ailes qui sont appliquées chacune par un côté, de façon facilement amovible, sur une arête périphérique extérieure (21, 22) de la surface d'appui (2) à glissement.
